# FASCICULE DE BREVET EUROPEEN

(11) **EP 2 572 227 B1**
(45) Date de publication et mention de la délivrance du brevet: **14.12.2016**
(21) Numéro de dépôt: 11719027.2
(22) Date de dépôt: 12.05.2011
(51) Int. Cl.: G02B 21/36, G02B 26/06, G02B 27/00, G02B 27/01, H04N 5/217

(54) **SYSTEME OPTIQUE A CORRECTION DYNAMIQUE DE L'IMAGE**
OPTISCHES SYSTEM ZUR DYNAMISCHEN KORREKTUR EINES BILDES
OPTICAL SYSTEM FOR DYNAMIC CORRECTION OF AN IMAGE

(30) Priorité: 18.05.2010 FR 1002081
(43) Date de publication de la demande: 27.03.2013
(73) Titulaire: THALES, 92400 Courbevoie (FR)
(72) Inventeur: COUMERT, Bruno, F-42570 Saint Heand (FR); REJEAUNIER, Xavier, F-42570 Saint Heand (FR)
(74) Mandataire: Bréda, Jean-Marc
(86) Numéro de dépôt international: PCT/EP2011/057727
(87) Numéro de publication internationale: WO 2011/144521

(56) Documents cités:
- EP-A2- 1 324 097
- US-A- 4 309 602
- US-A1- 2005 006 559
- US-A1- 2005 243 412
- US-A1- 2007 216 796
- US-B1- 6 473 228

## Description

Le domaine de l'invention est celui des systèmes optiques à grand champ ou grand angle destinés à des applications d'imagerie vidéo. L'invention s'applique à la restitution d'images. Le système optique selon l'invention est disposé devant un afficheur.

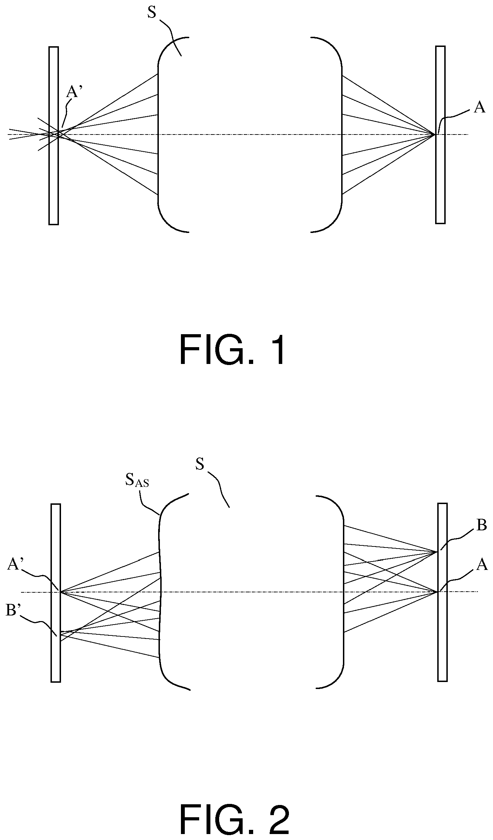

Tous les systèmes optiques simples, quelques soient leurs fonctions, sont constitués d'éléments optiques primaires tels que des lentilles, des miroirs ou des prismes. On démontre que, sauf pour certaines applications bien spécifiques, l'image d'un objet lumineux à travers un système optique simple n'est pas parfaite. On dit qu'elle n'est pas stigmatique. La figure 1 illustre ce problème. L'image du point A à travers le système optique S ne donne en aucun endroit une image A' ponctuelle. On appelle aberrations les déformations de l'image que l'on regroupe traditionnellement en aberrations géométriques et en aberrations chromatiques. Dans le cas de la figure 1, on parle d'aberration sphérique. Il est possible également d'exprimer les aberrations en déformations de front d'onde. On démontre que ces aberrations augmentent fortement lorsque l'ouverture du système optique ou les dimensions de l'objet ou le champ optique augmentent.

Pour compenser au mieux ces aberrations, les systèmes optiques complexes comportent généralement plusieurs éléments optiques ou plusieurs groupes d'éléments optiques agencés, optimisés de façon que les aberrations résultantes soient les plus faibles possibles. Généralement, on estime que les aberrations optiques sont parfaitement corrigées lorsque la « tache » image donnée par le système corrigée est de l'ordre de grandeur ou inférieure à celle donnée par la diffraction optique qui est la limite ultime de qualité des systèmes optiques.

Bien entendu, plus le nombre d'éléments optiques est élevé, plus le nombre de paramètres pouvant être optimisés est grand et plus l'optimisation permet de réduire les aberrations optiques. En revanche, le coût, la masse, l'encombrement et la complexité du système augmentent proportionnellement. Tout système optique est donc un compromis entre la qualité image et la complexité de l'architecture optique. Ces difficultés sont encore multipliées lorsque le système optique n'est pas un système centré, c'est-à-dire comportant un axe de symétrie de rotation mais un système hors d'axe.

Généralement, les éléments optiques sont composés de dioptres sphériques plus simples à réaliser mais qui entraînent des aberrations géométriques importantes. Pour réduire le nombre d'éléments optiques, il est possible d'utiliser des dioptres asphériques ou de forme libre encore appelé « free-form ». Cependant, l'utilisation de surfaces asphérisées n'est pas encore la panacée. En effet, la phase d'optimisation est effectuée pour l'ensemble du « champ » objet à partir d'une grille de points objets couvrant l'intégralité du champ. Or, les aberrations optiques dépendent de la position desdits points dans le champ objet. Les aberrations à réduire au centre du champ sont différentes de celles en bord de champ. En utilisant un élément optique comportant une surface asphérique, il est possible d'éliminer presque totalement les aberrations pour une portion de champ donné, par exemple pour les points objets situés sur l'axe optique du système ou proches de l'axe. Par contre, cette surface asphérique ne permet pas de corriger parfaitement les aberrations pour une autre portion du champ objet. Par conséquent, l'utilisation d'une surface asphérique permet une réduction « moyennée » des aberrations sur l'ensemble du champ mais ne permet pas de les éliminer totalement. La figure 2 illustre ce principe. Le système S comporte une surface asphérique S_{AS}. Celle-ci permet de corriger parfaitement les aberrations au centre du champ. Ainsi, l'image A' du point objet A situé sur l'axe est ponctuelle. Par contre, elle ne permet pas de corriger les aberrations du point objet B situé dans le champ. L'image B' du point B n'est plus ponctuelle.

Un grand nombre de systèmes optiques sont destinés à des applications vidéo soit pour l'enregistrement, soit pour la restitution, c'est-à-dire que les images sont enregistrées ou restituées de façon dynamique à une certaine fréquence, typiquement de plusieurs dizaines de hertz.

Il existe également des dispositifs optiques dits à optique active qui permettent de déformer une surface optique ou une épaisseur optique de façon dynamique en temps réel soit pour corriger un défaut de forme de la surface d'origine, soit pour corriger un objet déformé par la traversée de l'atmosphère terrestre, par exemple.

Les documents de référence US 6 473 228, EP 1 324 097 et WO 2011/129459 décrivent différents systèmes optiques comportant des moyens de correction de l'image tels que décrits ci-dessus.

Le système optique selon l'invention repose sur les trois principes décrits ci-dessus qui sont :
- La correction des aberrations géométriques d'une partie définie d'un champ objet par un système optique est possible de façon quasi-parfaite au moyen d'un élément optique de forme adaptée ;
- Une image vidéo, par nature temporelle, peut être découpée en une pluralité de zones distinctes ;
- Il existe des composants optiques à optique active susceptibles de réaliser des corrections géométriques instantanées.

L'invention est définie par les revendications annexées.

L'invention sera mieux comprise et d'autres avantages apparaîtront à la lecture de la description qui va suivre donnée à titre non limitatif et grâce aux figures annexées parmi lesquelles :
La figure 1 déjà commentée représente un système optique simple non corrigé des aberrations optiques ;
La figure 2 déjà commentée représente un système optique corrigé des aberrations optiques sur l'axe optique ;
La figure 3 représente le principe de fonctionnement d'un système optique selon l'invention à trois temps d'acquisition différents ;
Les figures 4 et 5 représentent deux vues en coupe d'un système de visualisation selon l'invention à deux temps d'acquisition différents.

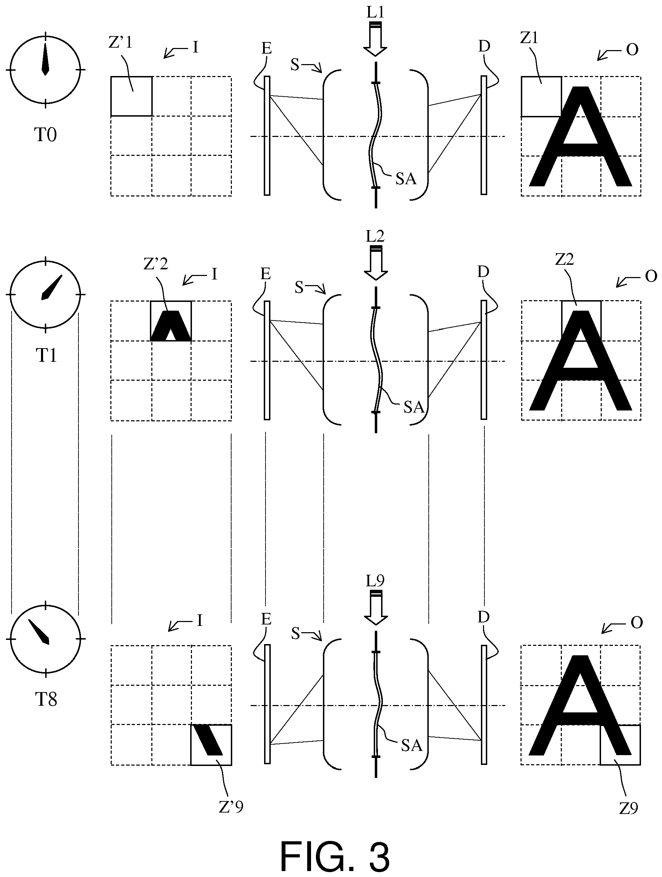

La figure 3 représente le principe de fonctionnement général d'un système optique selon l'invention. Le fonctionnement du dispositif étant séquentiel, la figure 3 comprend trois schémas représentant le système selon l'invention à trois instants différents T0, T1 et T8 figurés par un chronographe.

Le système optique S forme d'un objet 0 une image I. Dans le cas de la figure 3, par souci de simplicité, l'objet O et l'image I sont à distance finie. Mais, l'invention s'applique indifféremment à un objet situé à l'infini ou à une image située à l'infini. Lorsque l'objet est à l'infini et l'image à distance finie, le système optique est destiné à être intégré dans un dispositif de photo-réception de type caméra. Lorsqu'au contraire, l'objet est à distance finie et l'image à l'infini, le système optique fait partie d'un dispositif de visualisation qui peut être un visuel de casque. A titre d'exemple, l'objet de la figure 3 est un carré comportant un A majuscule représenté en noir sur fond blanc.

Le système optique S de la figure 3 comporte un certain nombre d'éléments optiques qui ne sont pas détaillés sur cette figure et dont la fonction optique est de former de l'objet une image grossièrement corrigée des aberrations géométriques. Ce système comporte également un élément optique adaptatif capable de modifier de façon quasi-instantanée un front d'onde optique selon une loi prédéterminée. Cet élément adaptatif peut être disposé dans la pupille du système optique par exemple. Cet élément adaptatif comporte un composant actif qui peut être utilisé en transmission ou en réflexion. Dans le cas de la figure 3, le composant actif est une surface active déformable. Les technologies employées pour la réalisation de ce composant actif peuvent être à base de matrices à cristaux liquides, de micro-miroirs, dispositifs connus sous le nom de « MEMS » ou de miroirs déformables à membrane continue.

Sur la figure 3, le carré objet est découpé en 9 zones Z carrées adjacentes de taille identique et numérotées de Z1 à Z9. Bien entendu, les zones peuvent être de taille ou de forme différente selon les besoins de l'application envisagée, les caractéristiques géométriques et optiques du système optique, ...Le découpage en 9 zones n'est donné qu'à titre indicatif. A ces 9 zones objet, correspondent 9 zones images numérotées de Z1' à Z9'. Pour chaque zone du carré image, la loi de déformation L de la surface active est optimisée de façon que les aberrations géométriques de l'image de ladite zone à travers le système optique soient les plus faibles possibles. Ainsi, dans le cas de la figure 3, aux 9 zones de l'objet correspondent 9 lois de déformation de la surface active notées de L1 à L9.

A titre d'exemple, si le système optique fait partie d'un dispositif de visualisation, l'objet se forme sur la surface d'un imageur D à une certaine fréquence F, c'est-à-dire que la durée totale T pour afficher l'objet vaut 1/F. L'image se forme sur un écran E. Le fonctionnement du dispositif est alors le suivant.

Pendant une première durée TZ1, commençant à l'instant TO, finissant à l'instant T1 et égale à T/9, l'afficheur affiche uniquement la zone Z1 et la loi appliquée sur la surface active est L1 comme représentée par le premier schéma de la figure 3. Par conséquent, la loi appliquée permettant de corriger parfaitement les aberrations du système, la zone Z1' observée par l'utilisateur est parfaite.

Ensuite, pendant une seconde durée TZ2, commençant à l'instant T1, finissant à l'instant T2 et égale à T/9, l'afficheur affiche uniquement la zone Z2 et la loi appliquée sur la surface active est L2 comme représentée par le second schéma de la figure 3. De nouveau, la loi appliquée permettant de corriger parfaitement les aberrations du système, la zone Z2' observée par l'utilisateur est parfaite.

Ainsi de suite jusqu'à la neuvième durée TZ9, commençant à l'instant T8, finissant à l'instant T9 et égale à T/9 où la loi appliquée est L9. Ainsi, zone par zone, le système optique permet de reconstituer une image parfaite. Bien entendu, la fréquence d'affichage doit être suffisamment élevée pour que l'utilisateur ne perçoive pas les changements de zone.

Dans ce qui précède, pour des raisons de clarté, le système optique décrit fait partie d'un système de visualisation. On peut, de la même façon, réaliser un système d'enregistrement utilisant le même principe. Dans ce cas, le système est agencé de façon que l'image de l'objet lumineux se focalise sur la surface de photo-réception et la surface de photo-réception acquière l'image de l'objet de façon séquentielle, chaque zone étant acquise pendant une durée prédéterminée, la loi prédéterminée de déformation de la surface active, lorsque le composant actif est une surface active, correspondant à ladite zone étant appliquée sur la surface active pendant ladite durée prédéterminée. Cette acquisition peut se faire zone adjacente après zone adjacente ou dans un ordre prédéterminé.

Dans ce qui précède, les systèmes optiques selon l'invention sont dédiés à la correction des aberrations géométriques. On peut également par ce moyen corriger les aberrations chromatiques. Dans ce cas, si l'objet lumineux émet sur un spectre polychromatique, pour chaque zone donnée, on détermine plusieurs lois de déformation de la surface active, chaque loi correspondant à une longueur d'onde prédéterminée du spectre polychromatique de l'objet lumineux. A l'enregistrement ou à la restitution, on enregistre ou on émet successivement pour chaque zone l'objet dans une gamme spectrale située autour d'une des longueurs d'onde prédéterminée et on applique simultanément la loi de déformation de la surface active correspondant à ladite zone et à la dite longueur d'onde. Par exemple, pour une zone donnée, si le système optique est un système de visualisation comprenant un afficheur, l'objet lumineux affiché peut se décomposer en trois composantes primaires rouge, verte et bleue. Dans ce cas, on affiche, pour chaque zone donnée de l'objet, d'abord la composante rouge et on applique la loi de déformation correspondant au rouge, puis la composante verte avec la loi de déformation « verte », puis la composante bleue avec la loi de déformation « bleue ».

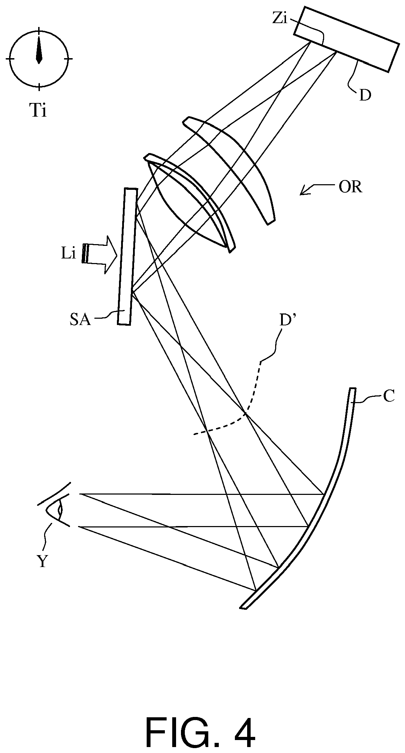

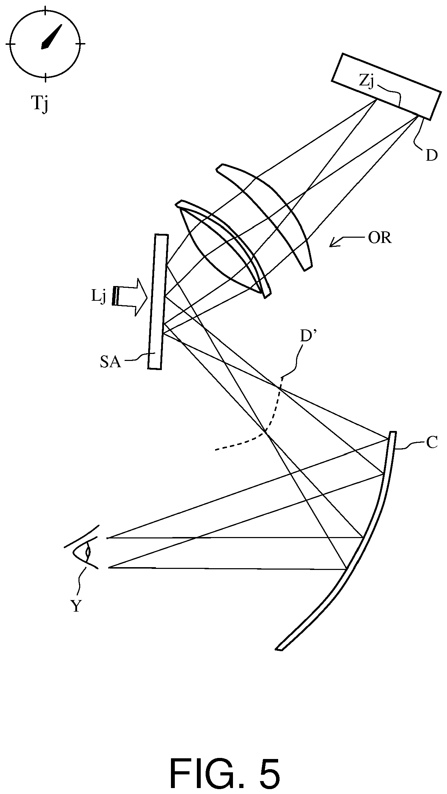

A titre d'exemple de réalisation, les figures 4 et 5 représentent deux vues en coupe d'un système de visualisation de casque selon l'invention à deux temps de restitution différents Ti et Tj. Le système de visualisation des figures 4 et 5 comporte classiquement un afficheur D, un système optique constitué d'une optique-relais OR, un miroir de renvoi SA, un combineur C. Dans le cas présent, l'optique-relais OR comporte trois lentilles simples et le combineur est une surface réfléchissante concave. L'optique-relais OR forme de l'image de l'afficheur D une image D'. Cette image D' est collimatée à l'infini par le collimateur C qui la renvoie vers l'oeil Y d'un utilisateur. Cette image peut être superposée ou non sur le paysage extérieur. Dans les solutions selon l'art antérieur, le miroir SA est un simple miroir de renvoi permettant de replier les faisceaux optiques de façon à optimiser l'encombrement et l'ergonomie du système de visualisation. Dans le système selon l'invention, le miroir SA comporte une surface active. Le fonctionnement du système est le suivant. A un premier instant donné Ti tel que représenté en figure 4, l'afficheur affiche une zone Zi de l'objet à visualiser, la loi de déformation Li de la surface SA a été programmée de façon à corriger parfaitement les aberrations géométriques du système optique pour la zone Zi. L'utilisateur perçoit une portion d'image Z'i parfaitement nette. A un second instant donné Tj tel que représenté en figure 5, l'afficheur affiche une seconde zone Zj de l'objet à visualiser, la loi de déformation Lj de la surface SA a été programmée de façon à corriger parfaitement les aberrations géométriques du système optique pour cette seconde zone Zj. L'utilisateur perçoit une portion d'image Z'j parfaitement nette. Ainsi, on peut, si le changement de zone est suffisamment rapide, reconstituer l'image perçue zone par zone de façon que l'utilisateur perçoive une image nette. La durée totale d'affichage d'une image doit être inférieure à la durée de la persistance rétinienne.

Le système optique selon l'invention peut s'appliquer à un grand nombre d'applications optiques, chaque fois que le champ optique est suffisamment grand et que les contraintes de coût ou d'implantation ne permettent pas la mise en place de solutions optiques complexes. Il peut s'appliquer indifféremment à des systèmes destinés à travailler dans le spectre visible, ultraviolet ou infrarouge.

## Revendications

1. Système de visualisation comprenant un afficheur (D) émettant un objet lumineux et un système optique (S) comprenant au moins un premier élément optique et un second élément optique adaptatif (SA) comprenant au moins un composant actif, c'est à dire un composant capable de modifier un front d'onde optique reçu quasi-instantanément selon une loi prédéterminée, ledit système optique destiné à faire une image (I) dudit objet lumineux (O) dont les caractéristiques géométriques et photométriques sont connues, l'image étant à distance finie ou à l'infini, **caractérisé en ce que**, l'afficheur étant composé d'une pluralité de zones adjacentes (Zi), à chaque zone (Zi) de l'objet correspond au moins une loi prédéterminée (Li) de modification du composant actif de façon que les aberrations géométriques de la zone de l'image donnée par le système (S) et correspondant à ladite zone de l'objet soient minimisées, ledit système de visualisation étant agencé de façon que l'afficheur émet l'objet lumineux de façon séquentielle, chaque zone étant émise pendant une durée prédéterminée, la loi prédéterminée de modification du composant actif correspondant à ladite zone étant appliquée au composant actif pendant ladite durée prédéterminée.

2. Système de visualisation selon la revendication 1, **caractérisé en ce que** le composant actif est du type dioptrique ou catoptrique.

3. Système de visualisation selon la revendication 1, **caractérisé en ce que**, si l'objet lumineux émet sur un spectre polychromatique, pour une zone donnée, il existe plusieurs lois prédéterminées de modification dudit composant actif, chaque loi correspondant à un domaine de longueurs d'onde prédéterminé du spectre polychromatique de l'objet lumineux.

4. Système de visualisation selon la revendication 1, **caractérisé en ce que** les zones adjacentes composant l'objet sont de taille différente, la taille de chaque zone étant adaptée à l'amplitude et à la forme des aberrations géométriques à corriger.

5. Système de visualisation selon la revendication 1, **caractérisé en ce que** l'élément optique adaptatif est disposé au voisinage de la pupille du système optique.

6. Système de visualisation selon la revendication 1, **caractérisé en ce qu'**au moins deux zones émises successivement sont adjacentes.

7. Système de visualisation selon la revendication 1, **caractérisé en ce que** le dit système est agencé de façon à être porté par la tête d'un utilisateur.

## Patentansprüche

1. Bildgebungssystem, das ein Display (D), das ein Lichtobjekt emittiert, und ein optisches System (S) umfasst, das wenigstens ein erstes optisches Element und ein zweites adaptives optisches Element (SA) umfasst, das wenigstens eine aktive Komponente umfasst, d.h. eine Komponente, die eine empfangene optische Wellenfront quasi sofort gemäß einem vorbestimmten Gesetz modifizieren kann, wobei das optische System zur Erzeugung eines Bildes (I) des Lichtobjekts (O) bestimmt ist, dessen geometrische und fotometrische Charakteristiken bekannt sind, wobei das Bild in einer finiten Distanz oder im Unendlichen ist, **dadurch gekennzeichnet, dass** das Display aus mehreren benachbarten Zonen (Zi) zusammengesetzt ist, wobei jeder Zone (Zi) des Objekts wenigstens ein vorbestimmtes Modifikationsgesetz (Li) der aktiven Komponente entspricht, so dass die der Zone des Objekts entsprechenden geometrischen Aberrationen der Zone des durch das System (S) gegebenen Bildes minimiert werden, wobei das Bildgebungssystem so ausgelegt ist, dass das Display das Lichtobjekt auf sequentielle Weise emittiert, wobei jede Zone für eine vorbestimmte Dauer emittiert wird, wobei das vorbestimmte Modifikationsgesetz der aktiven Komponente der Zone entspricht, die für die vorbestimmte Dauer auf die aktive Komponente angewandt wird.

2. Bildgebungssystem nach Anspruch 1, **dadurch gekennzeichnet, dass** die aktive Komponente vom dioptrischen oder katoptrischen Typ ist.

3. Bildgebungssystem nach Anspruch 1, **dadurch gekennzeichnet, dass**, wenn das Lichtobjekt in einem polychromatischen Spektrum emittiert, für eine gegebene Zone mehrere vorbestimmte Modifikationsgesetze der aktiven Komponenten existieren, wobei jedes Gesetz einer vorbestimmten Wellenlängendomäne des polychromatrischen Spektrums des Lichtobjekts entspricht.

4. Bildgebungssystem nach Anspruch 1, **dadurch gekennzeichnet, dass** die benachbarten Zonen, aus denen das Objekt zusammengesetzt ist, von unterschiedlicher Größe sind, wobei die Größe jeder Zone an die Amplitude und die Form der zu korrigierenden geometrischen Aberrationen angepasst ist.

5. Bildgebungssystem nach Anspruch 1, **dadurch gekennzeichnet, dass** das adaptive optische Element in der Nähe der Pupille des optischen Systems angeordnet ist.

6. Bildgebungssystem nach Anspruch 1, **dadurch gekennzeichnet, dass** wenigstens zwei sukzessiv emittierte Zonen benachbart sind.

7. Bildgebungssystem nach Anspruch 1, **dadurch gekennzeichnet, dass** das System zum Tragen am Kopf eines Benutzers ausgelegt ist.

## Claims

1. An optical system comprising a display device (D) emitting an illuminated object and an optical system (S) comprising at least a first optical element and a second adaptive optical element (SA) comprising at least one active component, in other words a component capable of modifying an optical wavefront received virtually instantaneously according to a predetermined law, said optical system being designed to produce an image (I) of said illuminated object (O) whose geometric and photometric characteristics are known, the image being at a finite distance or at infinity, **characterized in that** the display device being composed of a plurality of adjacent regions (Zi), to each region (Zi) of the objet there corresponds at least one predetermined law (Li) for modification of the active component in such a manner that the geometric aberrations of the region of the image given by the system (S) and corresponding to said region of the object are minimized, said optical system being arranged so that the display device emits the illuminated object in a sequential manner, each region being emitted for a predetermined period of time, the predetermined law for modification of the active component corresponding to said region being applied to the active component for said predetermined period of time.

2. The optical system as claimed in Claim 1, **characterised in that** the active component is of the dioptric or catoptric type.

3. The optical system as claimed in Claim 1, **characterised in that** if the illuminated object emits over a polychromatic spectrum, for a given region, there exist several predetermined laws for modification of said active component, each law corresponding to a range of predetermined wavelengths of the polychromatic spectrum of the illuminated object.

4. The optical system as claimed in Claim 1, **characterised in that** the adjacent regions composing the object are of different size, the size of each region being adapted to the amplitude and to the shape of the geometric aberrations to be corrected.

5. The optical system as claimed in Claim 1, **characterised in that** the adaptive optical element is disposed in the neighbourhood of the pupil of the optical system.

6. The optical system as claimed in Claim 1, **characterised in that** at least two regions emitted successively are adjacent.

7. The optical system as claimed in Claim 1, **characterised in that** said system is arranged so as to be carried by the head of a user.
